# EUROPÄISCHE PATENTSCHRIFT

(11) **EP 1 395 774 B1**
(45) Veröffentlichungstag und Bekanntmachung des Hinweises auf die Patenterteilung: **29.08.2007**
(21) Anmeldenummer: 02778884.3
(22) Anmeldetag: 06.06.2002
(51) Int. Cl.: F17C 1/00

(54) **SPEICHERBEHÄLTER FÜR KRYOGENE MEDIEN**
STORAGE CONTAINER FOR CRYOGENIC MEDIA
RESERVOIR DE STOCKAGE POUR FLUIDES CRYOGENIQUES

(30) Priorität: 13.06.2001 DE 10128516
(43) Veröffentlichungstag der Anmeldung: 10.03.2004
(73) Patentinhaber: Linde Aktiengesellschaft, 65189 Wiesbaden (DE)
(72) Erfinder: REESE, Wilfried-Henning, 85716 Unterschleissheim (DE)
(86) Internationale Anmeldenummer: PCT/EP2002/006227
(87) Internationale Veröffentlichungsnummer: WO 2002/101280

(56) Entgegenhaltungen:
- FR-A- 1 190 831
- US-A- 3 134 237
- US-A- 3 155 265
- US-A- 5 263 604
- US-A- 5 537 829

## Beschreibung

Die Erfindung betrifft einen Speicherbehälter, insbesondere Speicherbehälter für tiefkalte Flüssigkeiten, vorzugsweise für flüssigen Wasserstoff, aufweisend einen Außenbehälter und einen Innenbehälter, wobei der Innenbehälter über eine Aufhängung mit dem Außenbehälter verbunden ist.

Im Folgenden werden bei den Bezeichnungen spezieller kryogener Medien entsprechend ihrem Aggregatzustand die Buchstaben "G" für "gasförmig" und "L" für "flüssig" bzw, "liquid" vorangestellt; also z. B. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewusstsein als Energieträger zunehmend an Bedeutung. So werden bereits Lastkraftwagen, Busse sowie Personenkraftwagen mittels mit Wasserstoff-betriebenen Motoren bzw. Brennstoffzellen angetrieben. Darüber hinaus sind erste Versuche im Gange, Flugzeuge mit den genannten Medien anzutreiben.

Die Speicherung des Wasserstoffs "an Bord" der oben genannten Verkehrsmittel ist dabei in flüssiger Form am sinnvollsten. Zwar muss der Wasserstoff dazu auf etwa 21 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ in der Regel in den obengenannten Verkehrsmitteln ungünstiger, da die Speicherung hierbei in großvolumigen und schweren Speicherbehältern bei hohen Drücken erfolgen muss.

Wird aus derartigen Speicherbehältern über einen längeren Zeitraum kein Medium entnommen, so kommt es im inneren des Innenbehälters aufgrund des nicht zu verhindernden Wärmeeinfalles aus der Umgebung auf den Innenbehälter in dem in ihm gelagerten Medium zu einem Temperatur- und Druckanstieg. Entsprechend der Druckauslegung des Innenbehälters muss dann von Zeit zu Zeit gasförmiges Medium beispielsweise über ein Überdruckventil - aus dem Speicherbehälter abgelassen werden. Ist der Speicherbehälter in einem Kraftfahrzeug vorgesehen, so geht diese Menge des gasförmigen Mediums ungenutzt verloren.

Bekannte Speicherbehälter für flüssigen Wasserstoff ermöglichen Standzeiten von 2 bis 3 Tagen, bevor es zu einem Abdampfen von gasförmigem Wasserstoff kommt. Die Akzeptanz von Wasserstoff als Energieträger- insbesondere bei Personenkraftwagen - wird u. a. auch von der möglichen Länge der Standzeit eines Personenkraftwagens abhängen. Ein Abblasen von Wasserstoff nach 2 bis 3 Tagen würde vom Kunden sicherlich nicht akzeptiert werden.

Um den Wärmeeinfall in das in dem Speicherbehälter gelagerte Medium zu verringern und damit die Standzeiten zu verlängern, werden Speicherbehälterkonsfruktionen vorgeschlagen, wie sie beispielsweise aus der DE-C 198 16 651 bekannt sind. Bei der darin beschriebenen Speicherbehälterkonstruktion erfolgt die Halterung des Innenbehälters mittels eines zentrisch angebrachten Rohres, das zum einen die Stabilität des Innenbehälters gewährleistet und zum anderen den Wärmeeinfall aus der Umgebung auf den Innenbehälter minimiert.

Neben einer Verringerung des Wärmeeinfalles ist bei gattungsgemäßen Speicherbehältern jedoch auch darauf zu achten, dass die Halterung des Innenbehälters den Belastungen in unterschiedlichen Richtungen, die aufgrund der Beschleunigungen während des Transportes auftreten (können), standhält Um den Wärmeeinfall auf den Innenbehälter zu reduzieren, wird jedoch danach getrachtet, die Querschnitte der Halterungen möglichst zu minimieren, woraus eine hohe Spannungsauslastung des Halterungsmateriales resultiert. Mechanisch ist die Halterung des Innenbehälters aufgrund von Zug, Biegung und Querkraft einem räumlichen Spannungszustand unterworfen, wobei die Biegespannung für die Auslegung der Halterung die Hauptkomponente des Spannungszustandes aufbringt. Bei einer Vergrößerung der Isolierlänge steigt hierbei die Biegespannung an.

Aus der US-A-3 155 265 sind gattungsgemäße Speicherbehälter bekannt, bei denen die Aufhängung entweder durch zwei dreidimensionale Tragwerke oder mehrere zweidimensionale Tragwerke gebildet werden. Mittels derartiger Konstruktionen lassen sich jedoch die auftretenden Kräfte noch nicht optimal auffangen bzw. kompensieren.

FR 1190831 beschreibt einen Speicherbehälter mit einer Aufnängung.

Aufgabe der vorliegenden Erfindung ist es, einen gattungsgemäßen Speicherbehälter anzugeben, der den Wärmeeinfall auf das in ihm gespeicherte Medium verringert und zudem eine höhere Belastung des Innenbehälters bzgl. der auftretenden Beschleunigungskräfte ermöglicht.

Zur Lösung dieser Aufgabe wird ein Speicherbehälter vorgeschlagen, der dadurch gekennzeichnet ist, dass
- wenigstens eines der Tragwerke ein dreidimensionales Tragwerk ist, das aus wenigstens drei Stäben und/oder vorgespannten Seilen besteht und diese gelenkig gelagert mit dem Innenbehälter und/oder dem Außenbehälter verbunden sind,
- wenigstens ein weiteres Tragwerk ein zweidimensionales Tragwerk ist, das aus wenigstens zwei Stäben und/oder vorgespannten Seilen besteht und diese gelenkig gelagert mit dem Innenbehälter und/oder dem Außenbehälter verbunden sind, und
- wenigstens ein weiteres Tragwerk ein eindimensionales Tragwerk ist, das aus wenigstens einem Stab und/oder vorgespanntem Seil besteht und dieser bzw. dieses gelenkig gelagert mit dem Innenbehälter und/oder dem Außenbehälter verbunden ist,
- die Stäbe und/oder vorgespannten Seile zumindest eines Fachwerkes gleitend gelagert mit dem Innenbehälter und/oder dem Außenbehälter verbunden sind.

Bei dem erfindungsgemäßen Speicherbehälter kann nunmehr eine optimale Spannungsverteilung über den Querschnitt der Halterung realisiert werden. Es treten keine Biege- oder Querkräfte mehr auf, sondern lediglich Zug- und Druckkräfte. Die vorzusehenden Tragwerke zerlegen die Beschleunigungskräfte des Innen behälters in Zug- und Druckkräfte, welche dann auf den Außenbehälter des erfindungsgemäßen Speicherbehälters übertragen werden. Um keine Biegungen über die Stäbe zu übertragen, sind die Knotenpunkte der Tragwerke als Gelenk auszuführen, also die Stäbe und/oder Seile gelenkig zu lagern.

Die Vorspannung der Seile erfolgt hierbei vorzugsweise mittels Tellerfedern.

Da derartige Speicherbehälter im Regelfall eine Isolierung zwischen dem Innen- und dem Außenbehälter aufweisen - hierbei kommt im Regelfall eine sog. Superisolation zur Anwendung - und diese Isolierung durch die Halterung so wenig als möglich gestört bzw. unterbrochen werden soll, hat die Erfindung den weiteren Vorteil, dass aufgrund der realisierbaren geringen Querschnitte der Stäbe, Seile und/oder Federn eine nur geringe Störung der Isolierung erforderlich wird.

Den erfindungsgemäßen Speicherbehälter in vorteilhafter Weise weiterbildend wird vorgeschlagen, dass die Stäbe und/oder vorgespannten Seile zumindest eines Tragwerkes gleitend gelagert mit dem Innenbehälter und/oder dem Außenbehälter verbunden sind.

Werden Stäbe für die Tragwerke verwendet, so bestehen diese aus einem, vorzugsweise glasfaserverstärktem Kunststoff-, Kohlefaser- und/oder Kevlarmaterial.

Denkbar ist des Weiteren, dass zumindest einer der Stäbe in Einbuchtungen des Innenbehälters des erfindungsgemäßen Speicherbehälters hineinragt Mittels dieser Ausgestaltung wird erreicht, dass die Stäbe verlängert werden können, wodurch die Wärmeleitlänge vergrößert und damit weniger Wärme auf den Innenbehälter übertragen wird. Trotz der Verlängerung der Stäbe kann deren Querschnitt konstant bleiben, da auf Grund der in Achsrichtung wirkenden Kräfte keine zusätzlichen Belastungen auf den Stab bzw, die Stäbe wirken. Bei einer Verlängerung von auf Biegung beanspruchten Stäben muss der Querschnitt jedoch verstärkt werden, da mit der Verlängerung des Stabes auch das Biegemoment und damit die Spannung im Stab ansteigt.

Zu einer weiteren Verringerung des Wärmeeinfalles können die Stäbe - entsprechend einer Weiteren vorteilhaften Ausgestaltung des erfindungsgemäßen Speicherbehälters - auch hohl ausgebildet sein.

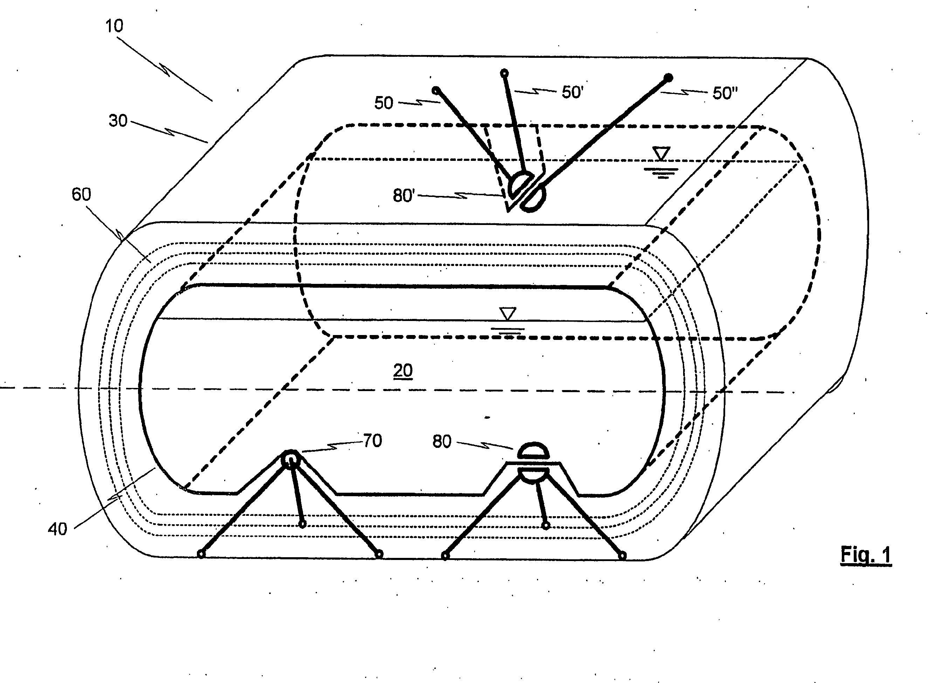

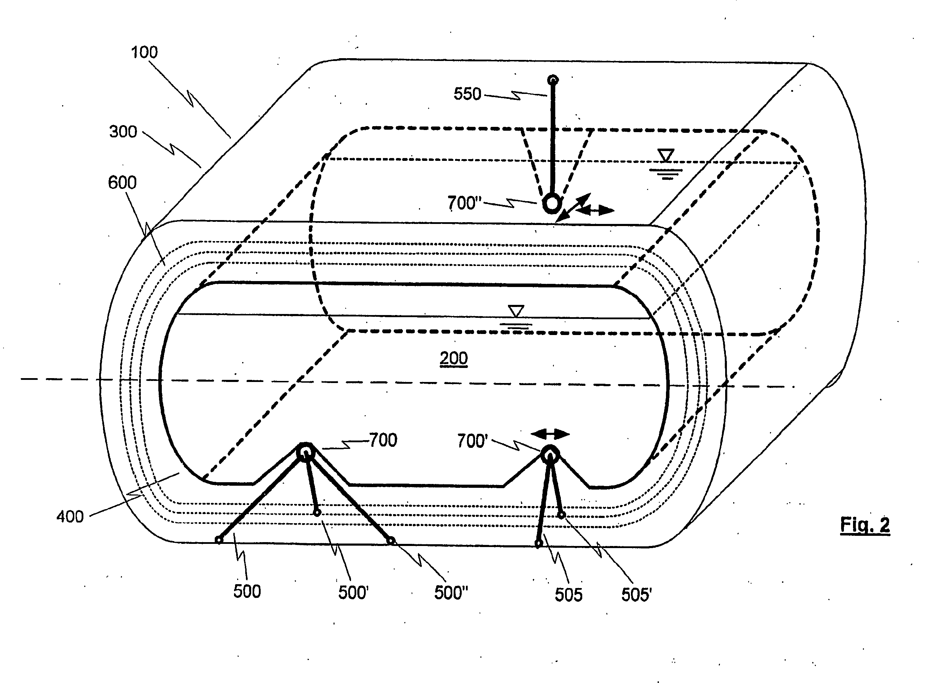

Der erfindungsgemäße Speicherbehälter sowie weitere Ausgestaltung desselben seien anhand der in den Figuren 1 und 2 dargestellten Ausführungsbeispiele näher erläutert.

Hierbei zeigen:
- Figur 1:: eine perspektivische Schnittdarstellung durch eine erste Flachtankkonstruktion
- Figur 2:: eine perspektivische Schnittdarstellung durch eine zweite Flachtankkonstruktion

Die in der Figur 1 dargestellte Ausführungsform des erfindungsgemäßen Speicherbehälters 10 zeigt einen Außenbehälter 30 sowie einen Innenbehälter 40, in dem das Medium 20 gespeichert ist. In den Figuren 1 und 2 nicht dargestellt ist bzw. sind die erforderlichen Befüll- und Entnahmeleitungen für das in dem Speicherbehälter 10 bzw. 100 zu speichernde Medium 20 bzw. 200. Zwischen dem Außenbehälter 30 (in der Figur 2 mir der Bezugsziffern 300 bezeichnet) und dem Innenbehälter 40 (in der Figur 2 mit der Bezugsziffer 400 bezeichnet) ist eine Isolierung 60 (in der Figur 2 mit der Bezugsziffer 600 bezeichnet) - vorzugsweise eine Superisolierung - vorgesehen.

Erfindungsgemäß ist die Aufhängung des Innenbehälters 40 nunmehr durch drei dreidimensionale Tragwerke gebildet. Hierbei besteht jedes Tragwerk aus drei oder mehr Stäben 50, 50', .....

Bei zwei der drei Tragwerke sind die Stäbe 50 bis 50" über ein sog. Loslager 80 mit dem Innenbehälter 40 gleitend gelagert verbunden, während die Stäbe des dritten Tragwerkes über ein Festlager 70 gelenkig gelagert mit dem Innenbehälter 40 verbunden sind.

Eine weitere Ausführungsform des erfindungsgemäßen Speicherbehälters ist in der Figur 2 dargestellt. Diese Konstruktion weist eine Aufhängung auf, die durch drei Tragwerke gebildet ist. Hierbei ist eines der Tragwerke ein dreidimensionales Tragwerk, das aus drei Stäben 500, 500' und 500" besteht, die mittels des Festlagers 700 gelenkig gelagert mit dem Innenbehälter 400 verbunden sind.

Ein weiteres Tragwerk ist als ein zweidimensionales Tragwerk ausgebildet, das aus zwei Stäben 505 und 505' besteht, die mittels des Festlagers 700' gelenkig gelagert mit dem Innenbehälter 400 verbunden sind. Dieses Tragwerk besitzt einen Freiheitsgrad in Längsachse des Speicherbehälters.

Das dritte Tragwerk wird durch lediglich einen Stab 550 gebildet, der ebenfalls mittels des Festlagers 700" gelenkig gelagert mit dem Innenbehälter 400 verbunden ist. Dieser besitzt zwei Freiheitsgrade, nämlich in Längs- und in Querrichtung des Speicherbehälters.

Anstelle der in den Figuren 1 und 2 dargestellten Stäbe 50, 50', ..., 500, 500', ..., 505, 505', ..., 550, ... können auch vorgespannte Seile zur Bildung der Tragwerke verwendet werden.

## Patentansprüche

1. Speicherbehälter (100), insbesondere Speicherbehälter für tiefkalte Flüssigkeiten (200), vorzugsweise für flüssigen Wasserstoff, aufweisend einen Außenbehälter (300) und einen Innenbehälter (400), wobei der Innenbehälter (400) über eine Aufhängung mit dem Außenbehälter (300) verbunden ist, wobei
- die Aufhängung durch wenigstens drei Tragwerke gebildet ist, und **dadurch gekennzeichnet, daß**
- wenigstens eines der Tragwerke ein dreidimensionales Tragwerk ist, das aus wenigstens drei Stäben (500, 500', 500") und/oder vorgespannten Seilen besteht und diese gelenkig gelagert mit dem Innenbehälter (400) und/oder dem Außenbehälter (300) verbunden sind,
- wenigstens ein weiteres Tragwerk ein zweidimensionales Tragwerk ist, das aus wenigstens zwei Stäben (505, 505') und/oder vorgespannten Seilen besteht und diese gelenkig gelagert mit dem Innenbehälter (400) und/oder dem Außenbehälter (300) verbunden sind, und
- wenigstens ein weiteres Tragwerk ein eindimensionales Tragwerk ist, das aus wenigstens einem Stab (550) und/oder vorgespanntem Seil besteht und dieser bzw. dieses gelenkig gelagert mit dem Innenbehälter (400) und/oder dem Außenbehälter (300) verbunden ist und
- die Stäbe (50, 50', ..., 500, 500', ..., 505, 505', ..., 550, ...) und/oder vorgespannten Seile zumindest eines Fachwerkes gleitend gelagert mit dem Innenbehälter (40, 400) und/oder dem Außenbehälter (30, 300) verbunden sind.

2. Speicherbehälter nach Anspruch 1, **dadurch gekennzeichnet, dass** die Stäbe (50, 50', ... , 500, 500', ..., 505, 505', ..., 550, ...) aus einem, vorzugsweise glasfaserverstärktem Kunststoff-, Kohlefaser- und/oder Kevlarmaterial bestehen.

3. Speicherbehälter nach Anspruch 1 oder 2, **dadurch gekennzeichnet, dass** zumindest einer der Stäbe (50, 50', ..., 500, 500', ..., 505, 505', ..., 550, ...) in Einbuchtungen des Innenbehälters (40, 400) hineinragt.

4. Speicherbehälter nach einem der Ansprüche 1 bis 3, **dadurch gekennzeichnet, dass** die Stäbe (50, 50', ..., 500, 500', ..., 505, 505', ..., 550, ...) hohl ausgebildet sind.

5. Verwendung eines Speicherbehälters (10, 100) nach einem der Ansprüche 1 bis 4 als Speicherbehälter für Kraftfahrzeuge.

## Claims

1. Storage tank (100), in particular storage tank for cryogenic liquids (200), preferably for liquid hydrogen, comprising an outer tank (300) and an inner tank (400), with the inner tank (400) being connected with the outer tank (300) via a suspension means, wherein
- the suspension means is comprised of at least three supporting structures, and **characterized in that**
- at least one of the supporting structures is a three-dimensional supporting structure comprising at least three bars (500, 500', 500") and/or pretensioned cables and these are connected with the inner tank (400) and/or the outer tank (300) in a hinged manner,
- at least one further supporting structure is a two-dimensional supporting structure comprising at least two bars (505, 505') and/or pretensioned cables and these are connected with the inner tank (400) and/or the outer tank (300) in a hinged manner, and
- at least one further supporting structure is a one-dimensional supporting structure comprising at least one bar (550) and/or pretensioned cable and the former and/or the latter is connected with the inner tank (400) and/or the outer tank (300) in a hinged manner and
- the bars (50, 50', ..., 500, 500, ..., 505, 505', ..., 550, ...) and/or pretensioned cables of at least one supporting structure are connected with the inner tank (40, 400) and/or the outer tank (30, 300) in a sliding manner.

2. Storage tank according to Claim 1, **characterized in that** the bars (50, 50', ..., 500, 500, ..., 505, 505', ..., 550, ...) are made of a preferably glass fibre reinforced plastic, carbon fibre and/or Kevlar material.

3. Storage tank according to Claim 1 or 2, **characterized in that** at least one of the bars (50, 50', ..., 500, 500, ..., 505, 505', ..., 550, ...) projects into recesses of the inner tank (40, 400).

4. Storage tank according to one of Claims 1 to 3, **characterized in that** the bars (50, 50', ..., 500, 500, ..., 505, 505', ..., 550, ...) are hollow.

5. Use of a storage tank (10, 100) according to one of Claims 1 to 4 as storage tank for motor vehicles.

## Revendications

1. Récipient de réserve (100), en particulier récipient de réserve pour liquides cryogéniques (200), de préférence pour hydrogène liquide, qui présente un récipient extérieur (300) et un récipient intérieur (400), le récipient intérieur (400) étant relié au récipient extérieur (300) par l'intermédiaire d'une suspension,
- la suspension étant formée par au moins trois ensembles porteurs,
**caractérisé en ce que**
- au moins l'un des ensembles porteurs est un ensemble porteur tridimensionnel constitué d'au moins trois barreaux (500, 500', 500") et/ou câbles pré-tendus reliés de manière articulée au récipient intérieur (400) et/ou au récipient extérieur (300),
- au moins un autre ensemble porteur est un ensemble porteur bidimensionnel constitué d'au moins deux barreaux (505, 505') et/ou câbles pré-tendus reliés de manière articulée au récipient intérieur (400) et/ou au récipient extérieur (300),
- au moins un autre ensemble porteur est un ensemble porteur unidimensionnel constitué d'au moins un barreau (550) et/ou câble pré-tendu relié de manière articulée au récipient intérieur (400) et/ou au récipient extérieur (300),
- les barreaux (50, 50', ..., 500, 500', ..., 505, 505', ..., 550, ...) et/ou câbles pré-tendus d'au moins un ensemble porteur étant reliés de manière coulissante au récipient intérieur (40, 400) et/ou au récipient extérieur (30, 300).

2. Récipient de réserve selon la revendication 1, **caractérisé en ce que** les barreaux (50, 50', ..., 500, 500', ..., 505, 505', ..., 550, ...) sont constitués d'un matériau synthétique renforcé de fibres de verre, un matériau de fibres de carbone et/ou un matériau de Kevlar.

3. Récipient de réserve selon les revendications 1 ou 2, **caractérisé en ce qu'**au moins l'un des barreaux (50, 50', ..., 500, 500', ..., 505, 505', ..., 550, ...) pénètre dans des creux formés dans le récipient intérieur (40, 400).

4. Récipient de réserve selon l'une des revendications 1 à 3, **caractérisé en que** les barreaux (50, 50', ..., 500, 500', ..., 505, 505', ..., 550, ...) sont creux.

5. Utilisation d'un récipient de réserve (10, 100) selon l'une des revendications 1 à 4 comme récipient de réserve pour véhicules automobiles.
